# EUROPÄISCHE PATENTSCHRIFT

(11) **EP 2 046 876 B1**
(45) Veröffentlichungstag und Bekanntmachung des Hinweises auf die Patenterteilung: **24.11.2010**
(21) Anmeldenummer: 07787359.4
(22) Anmeldetag: 11.07.2007
(51) Int. Cl.: C08J 9/00

(54) **MODIFIZIERTE OFFENZELLIGE SCHAUMSTOFFE UND DEREN VERWENDUNG IN STAUBSAUGERN**
MODIFIED OPEN-CELL FOAM MATERIALS AND USE THEREOF IN VACUUM CLEANERS
MOUSSE À ALVÉOLES OUVERTES MODIFIÉES ET LEUR UTILISATION DANS DES ASPIRATEURS

(30) Priorität: 21.07.2006 DE 102006034312
(43) Veröffentlichungstag der Anmeldung: 15.04.2009
(73) Patentinhaber: BASF SE, 67056 Ludwigshafen (DE)
(72) Erfinder: BAUS, Ulf, 69221 Dossenheim (DE); FRENZEL, Stefan, 68161 Mannheim (DE); VATH, Bernhard, 68259 Mannheim (DE); MÖCK, Christof, 68259 Mannheim (DE); TIEKOETTER, Stefan, 33699 Bielefeld (DE); BERTRAM, Andre, 33739 Bielefeld (DE); KINNIUS, Jörg, 32139 Spenge (DE); WOLF, Cornelius, 33739 Bielefeld (DE)
(86) Internationale Anmeldenummer: PCT/EP2007/057085
(87) Internationale Veröffentlichungsnummer: WO 2008/009601

(56) Entgegenhaltungen:
- WO-A-01/77246
- WO-A-01/77247
- JP-A- 2002 167 459

## Beschreibung

Die vorliegende Erfindung betrifft die Verwendung von Formkörpern mit Abmessungen Länge-Breite-Höhe jeweils im Bereich von 1 mm bis 3 cm, wobei mindestens eine Dimension größer ist als 5,5 mm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
   als Staubbindemittel in Staubsaugern.

Weiterhin betrifft die vorliegende Erfindung die Verwendung von flächigen Formkörpern mit einer Dicke im Bereich von 0,5 bis 1,5 cm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und
(c) einem formgebenden Schritt,
   als Staubbindemittel in Staubsaugern.

Weiterhin betrifft die vorliegende Erfindung Formkörper und ein Verfahren zu ihrer Herstellung. Weiterhin betrifft die vorliegende Erfindung Staubsauger, umfassend erfindungsgemäße Formkörper.

Schaumstoffe, speziell sogenannte offenzellige Schaumstoffe, finden Anwendungen in zahlreichen Anwendungen. Insbesondere offenzellige Schaumstoffe aus synthetischen Materialien haben sich als vielseitig erwiesen. Genannt seien beispielhaft Sitzkissen, Filtermaterialien, Klimaanlagen und Automobilteile, weiterhin Reinigungsmaterialien.

Bei Staubsaugern, insbesondere bei Bodenstaubsaugem, kommen in vielen Fällen Staubrückhaltesysteme zum Einsatz, die zwischen dem Lufteinlass eines Staubsammelraums und der Saugseite eines Gebläses angeordnet sind und den Staub vor dem Eintritt in das Gebläse zurückhalten. Eine besonders bekannte Variante ist ein als Beutel geformter Filter, der innenbeaufschlagt ist, d.h., der Staub lagert sich im Inneren des als Beutel ausgebildeten Filters ab. Derartige Filter müssen regelmäßig ausgetauscht werden. In manchen Staubsaugern, insbesondere in Kleinstsaugern, Mehrzwecksaugern oder Gewerbegeräten, gibt es außenbeaufschlagte Filter, die das Gebläse umgeben. Vorteilhaft daran ist die größere Aufnahmekapazität; nachteilig ist, dass derartige Filter nur für Grobstaub ausgelegt sind und dass Feinstaub, der allergieauslösende Pollen und Mikroorganismen beinhalten kann, den betreffenden Filter passiert und vom Gebläse in den zu saugenden Raum zurückgeblasen und dabei sogar aufgewirbelt wird.

In WO 06/58675 wird die Herstellung von modifizierten Schaumstoffen beschrieben und ihre Verwendung beispielsweise als Filtermaterial vorgeschlagen.

WO 01/77247 und WO 01/77246 betreffen die Herstellung von Klebstoffformulierungen, die unter anderem ein Polyurethan enthalten und die insbesondere für Automobilsitze geeignet Sind. Die Klebstoffformulierung kann beispielsweise auf einen Schaumstoff aufgebracht werden (Seite 9, Zeile 17 bzw. Seite 9, Zeile 13). Speziell offenbaren WO 01/77247 und WO 01/77246, dass eine Klebstoffformulierung auf einen Schaumstoff aufgebracht wird, der die Abmessungen 7,6 x 7,6 cm aufweist.

JP 2002 167459 offenbart Schaumstoffe, die mit einem Fluor-basierten oder Silikonbasierten wasserabstoßenden Mittel behandelt sind, und ihre Verwendung als wasserdichte unverformbare Materialien.

Neben den oben beschriebenen Staubsaugern, die einen Beutel oder eine Tüte aufweisen, kommen sogenannte "Bagless-Staubsauger" zum Einsatz, die ohne Staubbeutel arbeiten. Sie enthalten in der Regel einen Zyklon zur Staubtrennung bzw. Staubvorabscheidung und ein nachgeschaltetes Feinstaubfilter. Bisher bekannte Bagless-Systeme weisen den Nachteil auf, dass beim Entleeren des Zyklons - meistens geschieht dies über eine Klappe am Boden des Staubsammelgefäßes - eine Staubwolke entsteht, die diesem System einen unhygienischen Aspekt geben.

Es bestand die Aufgabe, ein Staubbindemittel bereit zu stellen, das in besonderer Weise für den Einsatz in Staubsaugern geeignet ist, das beispielsweise eine hohe Staubspeicherkapazität hat, eine hygienisch einwandfreie Anordnung aufweist und das die Fähigkeit hat, Feinstaub zu binden. Weiterhin bestand die Aufgabe, ein Verfahren zur Herstellung von erfindungsgemäßen Staubbindemitteln bereit zu stellen.

Dementsprechend wurde die eingangs definierte Verwendung von Formkörpern gefunden.

Erfindungsgemäß verwendet man Formkörper mit Abmessungen Länge·Breite·Höhe jeweils im Bereich von 1 mm bis 3 cm, wobei mindestens eine Dimension größer ist als 5,5 mm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
   als Staubbindemittel in Staubsaugern.

Man kann erfindungsgemäß flächige Formkörper mit einer Dicke im Bereich von 0,5 bis 1,5 cm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
   als Staubbindemittel in Staubsaugern verwenden.

Im Rahmen der vorliegenden Erfindung kann dabei wässrige Formulierung für Lösungen, Emulsionen oder Dispersionen stehen.

Erfindungsgemäß verwendete Formkörper haben Abmessungen von Länge·Breite·Höhe jeweils im Bereich von 1 mm bis 3 cm, wobei mindestens eine Dimension, d.h. Länge oder Breite oder Höhe, größer ist als 5,5 mm. Es können auch mindestens zwei oder alle drei Dimensionen größer sein als 5,5 mm.

In einer Ausführungsform der vorliegenden Erfindung sind erfindungsgemäße Formkörper ausgebildet als Zylinder, quadratische Säulen, Sattelkörper, Kugeln, Flocken, Granulat, Quader, Würfel, bevorzugt in Form von Tabletten oder Scheiben (Pellets), aber auch als Sterne, Buchstaben, igelförmige oder Hohlräume enthaltende Formkörper.

In einer anderen Ausführungsform der vorliegenden Erfindung sind erfindungsgemäße Formkörper flächig ausgestaltet, mit einer Dicke im Bereich von 0,5 bis 1,5 cm. Dabei sind Länge und Breite vorzugsweise deutlich größer als die Dicke, beispielsweise jeweils fünfmal so groß, bevorzugt mindestens zehnmal so groß. Länge und Breite können gleich oder verschieden groß sein.

In der letztgenannten Ausführungsform sind erfindungsgemäße flächige Formkörper beispielsweise als Matte, als Vlies oder als Tuch ausgestaltet.

In einer Ausführungsform der vorliegenden Erfindung sind die erfindungsgemäß verwendeten Formkörper ungefähr gleich groß, das heißt, die Abmessungen können um bis zu ± 10% variieren.

Zur Herstellung von erfindungsgemäß verwendeten Formkörpern geht man von offenzelligem Schaumstoff aus.

In einer Ausführungsform der vorliegenden Erfindung handelt es sich bei erfindungsgemäß verwendeten offenzelligen Schaumstoffen um solche auf Basis von synthetischem organischen Schaumstoff, beispielsweise auf Basis von organischem unmodifiziertem Schaumstoffen wie beispielsweise Schaumstoffen auf Basis von Polyurethanschaumstoffen oder Aminoplastschaumstoffen, beispielsweise aus Harnstoff-Formaldehyd-Harzen, weiterhin Schaumstoffen auf Basis von Phenol-Formaldehyd-Harzen und insbesondere Schaumstoffen auf Basis von Polyurethanen oder Aminoplast-Formaldehyd-Harzen, insbesondere Melamin-Formaldehyd-Harzen, wobei Schaumstoffe auf Basis von Polyurethanen im Rahmen der vorliegenden Erfindung auch als Polyurethanschaumstoffe und Schaumstoffe auf Basis von Melamin-Formaldehyd-Harzen auch als Melamin-Schaumstoffe bezeichnet werden.

Darunter ist zu verstehen, dass man erfindungsgemäß verwendete Formkörper aus offenzelligen Schaumstoffen herstellt, die synthetische organische Materialien umfassen, bevorzugt Polyurethanschaumstoffe oder Aminoplastschaumstoffe und insbesondere Melamin-Schaumstoffe.

Die zur Herstellung von erfindungsgemäßen Formkörpern eingesetzten unmodifizierten offenzelligen Schaumstoffe (a) werden im Rahmen der vorliegenden Erfindung ganz allgemein auch als unmodifizierte Schaumstoffe (a) bezeichnet. Die zur Ausübung des erfindungsgemäßen Verfahrens eingesetzten unmodifizierten offenzelligen Schaumstoffe (a) werden im Folgenden näher beschrieben.

Zur Ausübung des erfindungsgemäßen Herstellverfahrens geht man aus von offenzelligen Schaumstoffen (a), insbesondere von Schaumstoffen, in denen mindestens 50% aller Lamellen offen sind, bevorzugt 60 bis 100% und besonders bevorzugt 65 bis 99,9%, bestimmt nach DIN ISO 4590.

Als Ausgangsmaterial eingesetzte Schaumstoffe (a) sind vorzugsweise harte Schaumstoffe, das sind im Sinne der vorliegenden Erfindung Schaumstoffe, die bei einer Stauchung von 40% eine Stauchhärte von 1 kPa oder mehr aufweisen, bestimmt nach DIN 53577.

Als Ausgangsmaterial eingesetzte Schaumstoffe (a) haben eine Dichte im Bereich von 3 bis 500 kg/m³, bevorzugt 6 bis 300 kg/m³ und besonders bevorzugt im Bereich von 7 bis 300 kg/m³.

Als Ausgangsmaterial eingesetzte offenzellige Schaumstoffe (a) können einen mittleren Porendurchmesser (Zahlenmittel) im Bereich von 1 µm bis 1 mm aufweisen, bevorzugt 50 bis 500 µm, bestimmt durch Auswertung mikroskopischer Aufnahmen an Schnitten.

In einer Ausführungsform der vorliegenden Erfindung können als Ausgangsmaterial eingesetzte offenzellige Schaumstoffe (a) maximal 20, bevorzugt maximal 15 und besonders bevorzugt maximal 10 Poren pro m² aufweisen, die einen Durchmesser im Bereich von bis zu 20 mm haben. Die übrigen Poren haben üblicherweise einen geringeren Durchmesser.

In einer Ausführungsform der vorliegenden Erfindung weisen als Ausgangsmaterial eingesetzte offenzellige Schaumstoffe (a) eine BET-Oberfläche im Bereich von 0,1 bis 50 m²/g auf, bevorzugt 0,5 bis 20 m²/g, bestimmt nach DIN 66131.

In einer Ausführungsform der vorliegenden Erfindung geht man von offenzelligen Schaumstoffen (a) aus synthetischem organischen Material aus, bevorzugt von Polyurethanschaumstoffen oder von Melamin-Schaumstoffen.

Als Ausgangsmaterial zur Durchführung des erfindungsgemäßen Verfahrens besonders geeignete Polyurethanschaumstoffe sind als solche bekannt. Ihre Herstellung gelingt beispielsweise durch Umsetzung von
i) einem oder mehreren Polyisocyanaten, d.h. Verbindungen mit zwei oder mehr Isocyanatgruppen,
ii) mit einer oder mehreren Verbindungen mit mindestens zwei Gruppen, die gegenüber Isocyanat reaktiv sind, in Gegenwart von
iii) einem oder mehreren Treibmitteln,
iv) einem oder mehreren Startern
v) und einem oder mehreren Katalysatoren sowie
vi) sogenannten Zellöffnern.

Dabei können Starter iv) und Treibmittel iii) identisch sein.

Beispiele für geeignete Polyisocyanate i) sind an sich bekannte aliphatische, cycloaliphatische, araliphatische und vorzugsweise aromatischen mehrwertigen Verbindungen mit zwei oder mehr Isocyanatgruppen.

Im einzelnen seien beispielhaft genannt:
C₄-C₁₂-Alkylendiisocyanate, vorzugsweise Hexamethylen-1,6-diisocyanat;
cycloaliphatische Diisocyanate, wie z.B. Cyclohexan-1,3- und Cyclohexan-1,4-diisocyanat sowie beliebige Gemische dieser Isomeren, 1-Isocyanato-3,3,5-trimethyl-5-isocyanatomethyl-cyclohexan (Isophorondiisocyanat, IPDI), vorzugsweise aromatische Di- und Polyisocyanate, wie z.B. 2,4- und 2,6-Toluylendiisocyanat und entsprechende Isomerengemische, 4,4'-, 2,4'- und 2,2'-Diphenylmethan-diisocyanat und entsprechende Isomerengemische, Mischungen aus 4,4'- und 2,4'-Diphenylmethan-diisocyanaten, Polyphenyl-polymethylenpolyisocyanate, Mischungen aus 4,4'-, 2,4'- und 2,2'-Diphenylmethan-diisocyanaten und Polyphenyl-polymethylen-polyisocyanaten (Roh-MDI) und Mischungen von Roh-MDI mit Toluylen-diisocyanaten. Polyisocyanate können einzeln oder in Form von Mischungen eingesetzt werden.

Als Beispiele für ii) Verbindungen mit mindestens zwei Gruppen, die gegenüber Isocyanat reaktiv sind, seien Di- und Polyole, insbesondere Polyetherpolyole (Polyalkylenglykole), die nach an sich bekannten Methoden hergestellt werden, beispielsweise durch Alkalimetallhydroxid-katalysierte Polymerisation von einem oder mehreren Alkylenoxiden wie beispielsweise Ethylenoxid, Propylenoxid oder Butylenoxid erhältlich sind.

Ganz besonders bevorzugte Verbindungen ii) sind Ethylenglykol, Propylenglykol, Butylenglykol, 1,3-Propandiol, 1,4-Butandiol, 1,6-Hexandiol, Diethylenglykol, Dipropylenglykol, Triethylenglykol, Tripropylenglykol, Tetraethylenglykol, Pentaethylenglykol, Hexaethylengykol.

Als Treibmittel iii) sind geeignet: Wasser, inerte Gase, insbesondere Kohlendioxid, und sogenannte physikalische Treibmittel. Bei physikalischen Treibmitteln handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten i) und ii) eingebracht bzw. in ihnen gelöst werden, beispielsweise Kohlendioxid, Stickstoff oder Edelgase.

Geeignete bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt: Propan, n-Butan, iso- und Cyclobutan , n-, iso- und Cyclopentan, Cyclohexan, Dimethylether, Methylethylether, Methyl-tert.-butylether, Ameisensäuremethylester, Aceton sowie fluorierte Alkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, 1,1,1-Trifluor-2,2,2-trichlorethan, 1,1,2-Trifluor-1,2,2-trichlorethan, Difluorethane und Heptafluorpropan. Die genannten physikalischen Treibmittel können allein oder in beliebigen Kombinationen untereinander eingesetzt werden.

Der Einsatz von Perfluoralkanen zur Erzeugung offener Zellen ist aus EP-A 0 351 614 bekannt.

Als Starter iv) sind beispielsweise geeignet: Wasser, organische Dicarbonsäuren, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls N-mono- und N,N-dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Katalysatoren v) sind die in der Polyurethanchemie bekannten Katalysatoren geeignet, beispielsweise tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Dialkylderivate von Zinndialkylsalzen aliphatischer Carbonsäuren wie Dibutylzinndiacetat und Dibutylzinndilaurat.

Als Zellöffner vi) sind beispielhaft polare Polyetherpolyole (Polyalkylenglykole) zu nennen, das sind solche mit einem hohen Gehalt an Ethylenoxid in der Kette, vorzugsweise von mindestens 50 Gew.-%. Diese wirken durch Entmischung und Einfluss auf die Oberflächenspannung während der Verschäumung zellöffnend.
i) bis vi) werden in den in der Polyurethanchemie üblichen Mengenverhältnissen eingesetzt.

Als Ausgangsmaterial zur Durchführung des erfindungsgemäßen Herstellverfahrens besonders geeignete Melamin-Schaumstoffe sind als solche bekannt. Ihre Herstellung gelingt beispielsweise durch Verschäumung von
vii) einem Melamin-Formaldehyd-Vorkondensat, das neben Formaldehyd weitere Carbonylverbindungen wie beispielsweise Aldehyde einkondensiert enthalten können,
viii) ein oder mehrere Treibmittel,
ix) einen oder mehrere Emulgatoren,
x) einen oder mehrere Härter.

Melamin-Formaldehyd-Vorkondensate vii) können unmodifiziert sein, sie können aber auch modifiziert sein, beispielsweise können bis zu 20 mol-% des Melamins durch andere an sich bekannte Duroplastbildner ersetzt sein, beispielsweise alkylsubstituiertes Melamin, Harnstoff, Urethan, Carbonsäureamide, Dicyandiamid, Guanidin, Sulfurylamid, Sulfonsäureamide, aliphatische Amine, Phenol und Phenolderivate. Als weitere Carbonylverbindungen neben Formaldehyd können modifizierte Melamin-Formaldehyd-Vorkondensate beispielsweise Acetaldehyd, Trimethylolacetaldehyd, Acrolein, Furfurol, Glyoxal, Phthaldialdehyd und Terephthaldialdehyd einkondensiert enthalten.

Als Treibmittel viii) kann man die gleichen Verbindungen einsetzen wie unter iii) beschrieben.

Als Emulgatoren ix) kann man übliche nicht-ionogene, anionische, kationische oder betainische Tenside einsetzen, insbesondere C₁₂-C₃₀-Alkylsulfonate, bevorzugt C₁₂-C₁₈-Alkylsulfonate und mehrfach ethoxylierte C₁₀-C₂₀-Alkylalkohole, insbesondere der Formel R⁶-O(CH₂-CH₂-O)_{y}-H, wobei R⁶ gewählt wird aus C₁₀-C₂₀-Alkyl und y beispielsweise eine ganze Zahl im Bereich von 5 bis 100 bedeuten kann.

Als Härter x) kommen insbesondere saure Verbindungen in Frage, wie beispielsweise anorganische Bronstedsäuren, z.B. Schwefelsäure oder Phosphorsäure, organische Bronstedsäuren wie beispielsweise Essigsäure oder Ameisensäure, Lewissäuren und auch sogenannte latente Säuren.

Beispiele für geeignete Melamin-Schaumstoffe finden sich in EP-A 0 017 672.

Natürlich können als Ausgangsmaterial eingesetzte Schaumstoffe (a) Additive und Zuschlagstoffe enthalten, die in der Schaumstoffchemie üblich sind, beispielsweise Antioxidantien, Flammschutzmittel, Füllstoffe, Farbmittel wie beispielsweise Pigmente oder Farbstoffe und Biozide, beispielsweise

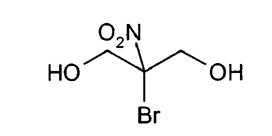

Weiterhin geht man zur Herstellung der erfindungsgemäßen Formkörper von mindestens einer Verbindung mit mindestens einer Halbaminal- oder Aminalgruppe pro Molekül aus oder von mindestens einem Copolymer, das mindestens ein OH-gruppenhaltiges oder β-Dicarbonylgruppen-haltiges oder Epoxidgruppenhaltiges Comonomer einpolymerisiert enthält.

Im Folgenden werden eingesetzte Verbindungen mit mindestens einer Halbaminal- oder Aminalgruppe pro Molekül und Copolymere, die mindestens ein OH-gruppenhaltiges oder β-Dicarbonylgruppen-haltiges oder Epoxidgruppenhaltiges Comonomer einpolymerisiert enthalten, auch kurz als Verbindung (b) oder als (b) bezeichnet. Geeignete Beispiele für Verbindung (b) sind beispielsweise erhältlich durch Kondensation von mindestens einer Stickstoff-haltigen Verbindung (B1) und mindestens einer Carbonylverbindung (B2) und gegebenenfalls weiteren Verbindungen (B3) und gegebenenfalls weiteren Umsetzungen nach der Kondensation.

In einer Ausführungsform der vorliegenden Erfindung handelt es sich bei mindestens einer Verbindung in Schritt (b) vorzugsweise um eine Verbindung, die nicht bei der Herstellung von unmodifiziertem Schaumstoff (a) eingesetzt wurde.

Beispiele für Stickstoff-haltige Verbindungen (B1) sind Harnstoff, N,N'-Dimethylharnstoff, (Meth)acrylsäure, Triazone, Tetrahydropyrimidinone, Imidazolinone, Tetrahydro-4H-1,3,5-oxadiazin-4-one, Alkylcarbamate, Methoxyethylcarbamate und (Meth)acrylsäuremethylolamid.

Beispiele für Carbonylverbindungen (B2) sind Ketone, insbesondere Di-(C₁-C₁₀-alkyl)ketone, bevorzugt Mono- Di- und Polyaldehyde, insbesondere C₁-C₁₀-Alkylmonoaldehyde wie beispielsweise Acetaldehyd oder Propionaldehyd und ganz besonders bevorzugt Formaldehyd, weiterhin Dialdehyde wie beispielsweise Glyoxal oder Phthaldialdehyd wie beispielsweise 1,2-Phthaldialdehyd, Butandial, Glutardialdehyd und Hexan-1,6-dial.

Beispiele für besonders bevorzugte weitere Verbindungen (B3) sind ein- oder mehrwertige Alkohole wie beispielsweise C₁-C₁₀-Alkanole, insbesondere Methanol, Ethanol, n-Propanol und n-Butanol, weiterhin Ethylenglykol, Propylenglykol, Butylenglykol, 1,4-Butandiol, 1,6-Hexandiol, 1,12-Dodecandiol, Glycerin, Diethylenglykol, Dipropylenglykol, Polyethylenglykole mit im Mittel bis zu 200, bevorzugt von 3 bis zu 20 Ethylenoxideinheiten pro Molekül (Zahlenmittel), Polypropylenglykole mit im Mittel bis zu 200, bevorzugt von 3 bis zu 20 Propylenoxideinheiten pro Molekül (Zahlenmittel), Polytetrahydrofuran mit im Mittel bis zu 200, bevorzugt von 3 bis zu 20 1,4-Butandiol-einheiten pro Molekül (Zahlenmittel) sowie einfach C₁-C₁₀-Alkyl-verkappte Mono-, Di- oder Polyethylen- bzw. -propylenglykole mit im Mittel bis zu 200, bevorzugt von 3 bis zu 20 Alkylenoxideinheiten pro Molekül (Zahlenmittel).

Beispiele für weitere Umsetzungen nach der Kondensation sind Veresterungen, Veretherungen und radikalische (Co)polymerisationen.

In einer Ausführungsform der vorliegenden Erfindung kann man Verbindung (b) aus mindestens einer Stickstoff-haltigen Verbindung (B1), mindestens zwei Carbonylverbindungen (B2) und beispielsweise bis zu 3 verschiedenen weiteren Verbindungen (B3) herstellen.

Besonders bevorzugte Beispiele für Verbindungen (b) sind solche der allgemeinen Formel I a bis I b 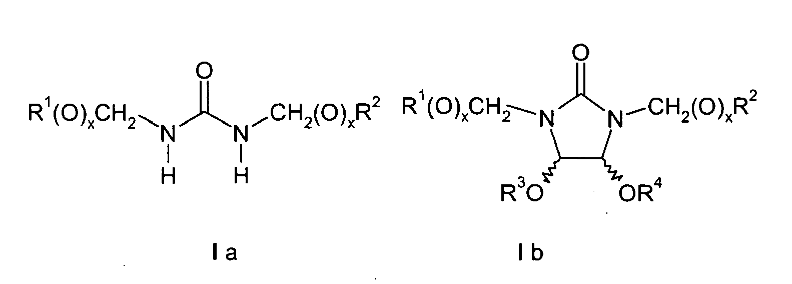 wobei die Variablen wie folgt definiert sind:
- R¹, R²: verschieden oder vorzugsweise gleich und gewählt aus Wasserstoff, C₁-C₁₂-Alkyl, verzweigt oder unverzweigt, ausgewählt aus Methyl, Ethyl, n- Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.- Hexyl, n-Heptyl, iso-Heptyl, n-Octyl, n-Nonyl, n-Decyl und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso- Amyl, n-Hexyl, iso-Hexyl, sec.-Hexyl, besonders bevorzugt C₁-C₄-Alkyl wie Me- thyl, Ethyl, n-Propyl, iso-Propyl, n-Butyl, iso-Butyl, sec.-Butyl und tert.-Butyl, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
- x: gleich oder verschieden und eine ganze Zahl gewählt aus null und eins, wobei in Formel I a mindestens ein x gleich eins gewählt wird; in Formel I b können beide x gleich null gewählt werden,
- m: ist eine ganze Zahl im Bereich von 1 bis 20,
- R³, R⁴: verschieden oder vorzugsweise gleich und gewählt aus Wasserstoff, C₁-C₁₂-Alkyl, verzweigt oder unverzweigt, ausgewählt aus Methyl, Ethyl, n-Propyl, iso- Propyl, n-Butyl, iso-Butyl, sec.-Butyl, tert.-Butyl, n-Pentyl, iso-Pentyl, sec.- Pentyl, neo-Pentyl, 1,2-Dimethylpropyl, iso-Amyl, n-Hexyl, iso-Hexyl, sec.- Hexyl, n-Heptyl, iso-Heptyl, n-Octyl, n-Nonyl, n-Decyl und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso- Amyl, n-Hexyl, iso-Hexyl, sec.-Hexyl, besonders bevorzugt C₁-C₄-Alkyl wie Me- thyl, Ethyl, n-Propyl, iso-Propyl, n-Butyl, iso-Butyl, sec.-Butyl und tert.-Butyl,
- R⁵: gleich oder verschieden und gewählt aus C₁-C₄-Alkyl wie Methyl, Ethyl, n- Propyl, iso-Propyl, n-Butyl, iso-Butyl, sec.-Butyl und tert.-Butyl und insbesondere Wasserstoff.

Verbindungen (b) insbesondere der allgemeinen Formel I a und I b sind an sich bekannt. Verbindungen (b) insbesondere der allgemeinen Formel I a und I b liegen im Allgemeinen nicht rein gemäß einer definierten Formel vor; üblicherweise werden intermolekulare Umlagerungen der Reste R¹ bis R⁴, also Um-Acetalisierungsreaktionen und Um-Aminalisierungsreaktionen, und auch zu einem gewissen Grade Kondensationsreaktionen und Abspaltungsreaktionen beobachtet. Die oben angegebene Formel I a bzw. I b ist in dem Sinne zu verstehen, dass sie die stöchiometrischen Verhältnisse der Substituenten definiert und auch intermolekulare Umlagerungsprodukte und Kondensationsprodukte mit umfasst.

Eine andere Gruppe von bevorzugt eingesetzten Verbindungen (b) sind Homo- und insbesondere Copolymere von Verbindungen der allgemeinen Formel II 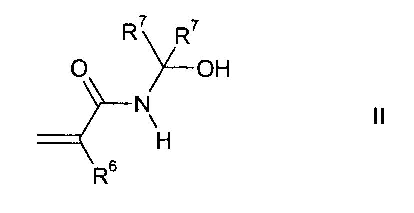 wobei die Variablen wie folgt definiert sind:
- R⁶: gewählt aus Wasserstoff und C₁-C₁₂-Alkyl, bevorzugt lineares C₁-C₁₂-Alkyl, aus- gewählt aus Methyl, Ethyl, n-Propyl, n-Butyl, n-Pentyl, n-Hexyl, n-Heptyl, n- Octyl, n-Nonyl, n-Decyl und n-Dodecyl; bevorzugt lineares C₁-C₆-Alkyl wie Me- thyl, Ethyl, n-Propyl, n-Butyl, n-Pentyl, iso-Pentyl, n-Hexyl, besonders bevorzugt C₁-C₄-Alkyl wie Methyl, Ethyl, n-Propyl und n-Butyl, wobei Wasserstoff und Me- thyl ganz besonders bevorzugt sind,
- R⁷: verschieden oder vorzugsweise gleich und gewählt aus C₁-C₁₂-Alkyl, bevorzugt lineares C₁-C₁₂-Alkyl, ausgewählt aus Methyl, Ethyl, n-Propyl, n-Butyl, n-Pentyl, n-Hexyl, n-Heptyl, n-Octyl, n-Nonyl, n-Decyl und n-Dodecyl; bevorzugt lineares C₁-C₆-Alkyl wie Methyl, Ethyl, n-Propyl, n-Butyl, n-Pentyl, iso-Pentyl, n-Hexyl, besonders bevorzugt C₁-C₄-Alkyl wie Methyl, Ethyl, n-Propyl und n-Butyl, und besonders bevorzugt Wasserstoff.

Ganz besonders bevorzugt sind in Formel II beide Variablen R⁷ gleich Wasserstoff und R⁶ gewählt aus Methyl oder Wasserstoff.

Bevorzugt eingesetzte Homo- und Copolymere von Verbindungen der allgemeinen Formel II können beispielsweise Molekulargewichte M_{w} im Bereich von 500 bis 100.000 g/mol aufweisen, bevorzugt 1.000 bis 50.000 g/mol.

Wünscht man Copolymere von einer oder mehreren Verbindungen der allgemeinen Formel II einzusetzen, so kommen insbesondere Copolymere von einer oder mehreren Verbindungen der allgemeinen Formel II mit einem oder vorzugsweise mindestens zwei Comonomeren in Betracht, gewählt aus
einem oder mehreren (Meth)acrylsäure-C₁-C₁₀-Alkylester, insbesondere mit Methylacrylat, Ethylacrylat, n-Butyl(meth)acrylat, 2-Ethylhexyl(meth)acrylat, (Meth)acrylsäure,
vinylaromatischen Verbindungen wie beispielsweise Styrol,
(Meth)acrylnitril und
(Meth)acrylamid.

Wünscht man Copolymere einzusetzen, die mindestens ein OH-gruppenhaltiges oder β-Dicarbonylgruppen-haltiges oder Epoxidgruppenhaltiges Comonomer einpolymerisiert enthalten, so verwendet man bevorzugt Copolymere, die mindestens ein Comonomer der allgemeinen Formel III 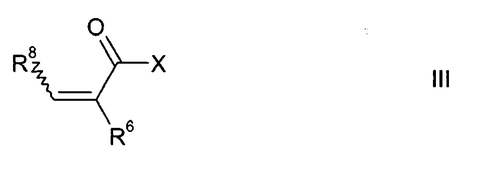 einpolymerisiert enthalten, wobei die Variablen wie folgt definiert sind:
- R8: gewählt aus C₁-C₁₂-Alkyl, bevorzugt lineares C₁-C₁₂-Alkyl, ausgewählt aus Me- thyl, Ethyl, n-Propyl, n-Butyl, n-Pentyl, n-Hexyl, n-Heptyl, n-Octyl, n-Nonyl, n- Decyl und n-Dodecyl; bevorzugt lineares C₁-C₆-Alkyl wie Methyl, Ethyl, n- Propyl, n-Butyl, n-Pentyl, iso-Pentyl, n-Hexyl, besonders bevorzugt C₁-C₄-Alkyl wie Methyl, Ethyl, n-Propyl und n-Butyl, und ganz besonders bevorzugt Wasserstoff,
- X: gewählt aus OH, Glycidyl, 2-Hydroxyethyl, 3-Hydroxypropyl, 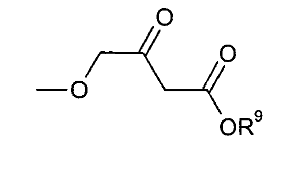
wobei
- R⁹: gewählt aus C₁-C₁₂-Alkyl, verzweigt oder unverzweigt, ausgewählt aus Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso- Hexyl, sec.-Hexyl, n-Heptyl, iso-Heptyl, n-Octyl, n-Nonyl, n-Decyl und n- Dodecyl, bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevor- zugt C₁-C₄-Alkyl wie Methyl, Ethyl, n-Propyl, iso-Propyl, n-Butyl, iso-Butyl, sec.- Butyl und tert.-Butyl, ganz besonders bevorzugt Methyl.

Wünscht man solche Copolymere als (b) einzusetzen, die eine Verbindung der allgemeinen Formel III mit X = OH einpolymerisiert enthalten, so sind solche Copolymere bevorzugt, die kein Ethylen als Comonomer einpolymerisiert enthalten.

In einer Ausführungsform der vorliegenden Erfindung enthalten in Schritt (b) eingesetzte wässrige Formulierung im Bereich von 1 bis 60 Gew.-%, bevorzugt 10 bis 40 Gew.-% Verbindung (b).

Um unmodifizierte Schaumstoffe (a) mit Verbindung (b) zu kontaktieren, sind verschiedene Techniken denkbar.

Das Kontaktieren kann man beispielsweise bewerkstelligen durch Eintauchen von unmodifiziertem Schaumstoff (a) in wässrige Formulierung von Verbindung (b), durch Imprägnieren von unmodifiziertem Schaumstoff (a) mit wässriger Formulierung von Verbindung (b), durch Tränken von unmodifiziertem Schaumstoff (a) mit wässriger Formulierung von Verbindung (b), durch unvollständiges oder vorzugsweise vollständiges Besprühen von unmodifiziertem Schaumstoff (a) mit wässriger Formulierung von Verbindung (b), oder durch Aufkalandrieren von wässriger Formulierung von Verbindung (b) auf unmodifizierten Schaumstoff (a).

In einer anderen Ausführungsform der vorliegenden Erfindung geht man zum Kontaktieren so vor, dass man wässrige Formulierung von Verbindung (b) auf unmodifizierten Schaumstoff (a) aufrakelt. Nach Tränken und Besprühen kann zur gleichmäßigen Verteilung der Formulierung und Einstellen der gewünschten Konzentration zwischen mindestens zwei sich beispielsweise drehenden Walzen abgequetscht werden.

In einer Ausführungsform der vorliegenden Erfindung kann man im Anschluss an das Kontaktieren unmodifizierten Schaumstoff (a) und wässrige Formulierung von Verbindung (b) aufeinander einwirken lassen, beispielsweise über einen Zeitraum im Bereich von 0,1 Sekunden bis 24 Stunden, bevorzugt 0,5 Sekunden bis 10 Stunden und besonders bevorzugt 1 Sekunde bis 6 Stunden.

In einer Ausführungsform der vorliegenden Erfindung kontaktiert man unmodifizierten Schaumstoff (a) und wässrige Formulierung von Verbindung (b) bei Temperaturen im Bereich von 0°C bis 250°C, bevorzugt 5°C bis 190°C und besonders bevorzugt 10 bis 165°C.

In einer Ausführungsform der vorliegenden Erfindung kontaktiert man unmodifizierten Schaumstoff (a) und wässrige Formulierung von Verbindung (b) zunächst bei Temperaturen im Bereich von 0°C bis 50°C und ändert danach die Temperatur, beispielsweise erwärmt man auf Temperaturen im Bereich von 60°C bis 250°C, bevorzugt von 65°C bis 180°C.

In einer anderen Ausführungsform der vorliegenden Erfindung kontaktiert man unmodifizierten Schaumstoff (a) und wässrige Formulierung von Verbindung (b) zunächst bei Temperaturen im Bereich von 0°C bis 120°C und ändert danach die Temperatur, beispielsweise erwärmt man auf Temperaturen im Bereich von 30°C bis 250°C, bevorzugt von 125°C bis 200°C.

In einer bevorzugten Ausführungsform der vorliegenden Erfindung wählt man die Mengen der Einsatzstoffe unmodifizierte Schaumstoff (a) und wässriger Formulierung von Verbindung (b) so, dass erfindungsgemäßes Produkt eine deutlich höhere Dichte hat als der betreffende unmodifizierte Schaumstoff (a).

In einer Ausführungsform der vorliegenden Erfindung arbeitet man während des Kontaktierens von unmodifiziertem Schaumstoff (a) mit wässriger Formulierung von Verbindung (b) bei Atmosphärendruck. In einer anderen Ausführungsform der vorliegenden Erfindung arbeitet man zur Durchführung des erfindungsgemäßen Verfahrens unter erhöhtem Druck, beispielsweise bei Drücken im Bereich von 1,1 bar bis 10 bar. In einer anderen Ausführungsform der vorliegenden Erfindung arbeitet man zur Durchführung des erfindungsgemäßen Verfahrens unter erniedrigtem Druck, beispielsweise bei Drücken im Bereich von 0,1 mbar bis 900 mbar, bevorzugt bis 100 mbar.

In einer Ausführungsform der vorliegenden Erfindung kontaktiert man unmodifizierten Schaumstoff (a) mit wässriger Formulierung von Verbindung (b) so, dass Verbindung (b) möglichst gleichmäßig in allen Dimensionen über unmodifizierten Schaumstoff (a) verteilt wird. Geeignete Methoden sind Methoden mit einem hohen Auftragswirkungsgrad. Beispielhaft seien genannt: vollständiges Tränken, Tauchen, Fluten, Trommeln, Aufspritzen wie z.B. Druckluftspritzen, Airless-Spritzen, weiterhin Hochrotationszerstäubung, Beschichten, Aufrakeln, Aufkalandrieren, Bestreichen, Aufrollen, Aufwischen, Walzen, Schleudern, Zentrifugieren.

In einer anderen Ausführungsform der vorliegenden Erfindung kontaktiert man unmodifizierten Schaumstoff (a) mit wässriger Formulierung von Verbindung (b) so, dass man eine ungleichmäßige Verteilung von wässriger Formulierung von Verbindung (b) auf unmodifizierten Schaumstoff (a) bewirkt. So kann man in einer Ausführungsform der vorliegenden Erfindung beispielsweise unmodifizierten Schaumstoff (a) mit wässriger Formulierung von Verbindung (b) ungleichmäßig besprühen und anschließendes Einwirken lassen. In einer anderen Ausführungsform der vorliegenden Erfindung kann man unmodifizierten Schaumstoff (a) unvollständig mit wässriger Formulierung von Verbindung (b) tränken. In einer anderen Ausführungsform der vorliegenden Erfindung kann man einen Teil von unmodifiziertem Schaumstoff (a) einmal und einen anderen Teil von unmodifiziertem Schaumstoff (a) mindestens zweimal mit wässriger Formulierung von Verbindung (b) kontaktieren. In einer anderen Ausführungsform tränkt man unmodifizierten Schaumstoff (a) mit wässriger Formulierung von Verbindung (b) vollständig und spült die oberste Schicht mit beispielsweise Wasser wieder sauber. Anschließend lässt man einwirken. Dadurch beschichtet man unmodifizierten Schaumstoff (a) im Kern; die äußere Oberfläche bleibt unbeschichtet.

Wenn man unmodifizierten Schaumstoff (a) mit wässriger Formulierung von Verbindung (b) so kontaktiert, dass man eine ungleichmäßige Verteilung wässriger Formulierung von Verbindung (b) auf unmodifiziertem Schaumstoff (a) bewirkt hat, so erreicht man beispielsweise durch Aufeinandereinwirkenlassen über einen Zeitraum von 2 Minuten oder mehr, dass nicht nur die äußerste Schicht von unmodifiziertem Schaumstoff (a) mit wässriger Formulierung von Verbindung (b) kontaktiert wird.

Wenn man unmodifizierten Schaumstoff (a) mit wässriger Formulierung von Verbindung (b) so kontaktiert, dass man eine ungleichmäßige Verteilung von wässriger Formulierung von Verbindung (b) auf unmodifiziertem Schaumstoff (a) bewirkt hat, so kann erfindungsgemäß modifizierter Schaumstoff über seinen Querschnitt uneinheitliche mechanische Eigenschaften aufweisen. So ist es beispielsweise möglich, dass erfindungsgemäß an den Stellen, an denen er mit größeren Anteilen an wässriger Formulierung von Verbindung (b) kontaktiert worden ist, weicher ist als an den Stellen, an denen er mit weniger wässriger Formulierung von Verbindung (b) kontaktiert worden ist.

In einer Ausführungsform der vorliegenden Erfindung kann man eine ungleichmäßige Verteilung der wässrigen Formulierung von Verbindung (b) durch Kalandrieren an perforierten Walzen oder Lochblechen erreichen. Die Ausbildung einer ungleichmäßigen Verteilung von wässriger Formulierung von Verbindung (b) kann man dadurch verstärken, dass man eine Vakuumabsaugung an mindestens einer perforierten Walze bzw. mindestens einem Lochblech durchführt.

In einer speziellen Ausführungsform der vorliegenden Erfindung stellt man nach dem Kontaktieren durch Abquetschen zwischen zwei gegenläufig sich drehenden Walzen auf eine definierte Flottenaufnahme ein, beispielsweise im Bereich von 20 bis 800 Gew.-%, bezogen auf das Gewicht des unmodifizierten Schaumstoffs (a). Die Konzentration von Verbindung (b) in der Formulierung beträgt zwischen 1 und 99 Gew.-%.

In einer Ausführungsform der vorliegenden Erfindung kann man im Anschluss an das Kontaktieren spülen, beispielsweise mit einem oder mehreren Lösungsmitteln und bevorzugt mit Wasser.

In einer Ausführungsform der vorliegenden Erfindung kann man im Anschluss an das Kontaktieren und gegebenenfalls das Spülen trocknen, beispielsweise mechanisch durch z. B. Auswringen oder Kalandrieren, insbesondere durch Abquetschen durch zwei Rollen, oder thermisch, beispielsweise in Mikrowellenöfen, Heißluftgebtäsen oder in Trockenschränken, insbesondere Vakuumtrockenschränken, wobei man Trockenschränke beispielsweise bei Temperaturen im Bereich von 30 bis 150°C betreiben kann. Unter Vakuum kann man im Zusammenhang mit Vakuumtrockenschränken einen Druck beispielsweise im Bereich von 0,1 bis 850 mbar verstehen.

Die Zeit, die man für gewünschtenfalls durchgeführte Trockenschritte aufwendet, gehören definitionsgemäß nicht zur Einwirkzeit im Sinne der vorliegenden Erfindung.

In einer Ausführungsform der vorliegenden Erfindung kann man thermisches Trocknen bewerkstelligen durch Erwärmen auf Temperaturen im Bereich von 20°C bis 150°C, beispielsweise über einen Zeitraum von 10 Sekunden bis 20 Stunden.

Zusätzlich zu wässriger Formulierung von Verbindung (b) kann man erfindungsgemäß unmodifizierten Schaumstoff (a) mit mindestens einem Katalysator (d) kontaktieren. Geeignet sind beispielsweise Metall- und Ammoniumsalze und anorganische oder organische Säuren. Geeignete Metallsalze sind beispielweise Metallhalogenide, Metallsulfate, Metallnitrate, Metalltetrafluoroborate, Metallphosphate oder deren Gemische. Beispiele sind Magnesiumchlorid, Magnesiumsulfat, Zinkchlorid, Lithiumchlorid, Lithiumbromid, Bortrifluorid, Aluminiumchlorid, Aluminiumsulfat, Alaune wie beispielsweise KAl(SO₄)₂·12 H₂O, Zinknitrat, Natriumtetrafluoroborat und Gemische der vorstehend beschriebenen Metallsalze.

Als Katalysator (d) geeignete Ammoniumsalze sind Ammoniumsalze aus der Gruppe Ammoniumchlorid, Ammoniumnitrat, Ammoniumsulfat, Ammoniumoxalat, Diammoniumphosphat oder Gemische der vorstehend beschriebenen Ammoniumsalze.

Als Katalysator (d) geeignete anorganische und organische Säuren sind Maleinsäure, Ameisensäure, Zitronensäure, Weinsäure, Oxalsäure, para-Toluolsulfonsäure, Salzsäure, Schwefelsäure, Borsäure und deren Gemische.

Natürlich kann man auch Mischungen von beispielsweise mindestens einem Metallsalz und mindestens einem Ammoniumsalz oder mindestens einem Metallsalz oder Ammoniumsalz und mindestes einer organischen oder anorganischen Säure als Katalysator (d) einsetzen.

Ganz besonders bevorzugt als Katalysator (d) sind Brønsted-saure Katalysatoren, beispielsweise ZnCl₂, Zn(NO₃)₂, jeweils auch in Form ihrer Hydrate, NH₄Cl, MgSO₄, Al₂(SO₄)₃, jeweils auch in Form ihrer Hydrate, und ganz besonders bevorzugt MgCl₂, insbesondere in Form seines Hexahydrats.

Bezogen auf Verbindung (b) setzt man vorzugsweise ein Drittel bis ein Zwanzigstel des Gewichts an Katalysator (d) ein, bestimmt jeweils ohne gegebenenfalls vorhandenes Hydratwasser.

Bevorzugt werden Magnesiumchlorid, Zinkchlorid, Magnesiumsulfat, Aluminiumsulfat verwendet. Besonders bevorzugt ist Magnesiumchlorid.

In einer Ausführungsform der vorliegenden Erfindung kontaktiert man unmodifizierten Schaumstoff (a) mit wässriger Lösung von Verbindung (b) und gegebenenfalls Katalysator (d) bei einem pH-Wert im Bereich von 3,0 bis 7,5, wobei der gewünschte pH-Wert gegebenenfalls durch Zugabe von Säure, Lauge oder eines Puffers eingestellt werden kann. Die Verwendung eines Puffers wird bevorzugt.

In einer Ausführungsform der vorliegenden Erfindung kann man mindestens einen unmodifizierten Schaumstoff (a) nicht nur mit wässriger Formulierung von Verbindung (b) und gegebenenfalls Katalysator (d), sondern auch mit mindestens einem Zuschlagstoff (e) kontaktieren, gewählt aus

Bioziden, wie beispielsweise Silberpartikeln oder monomeren oder polymeren organischen Bioziden wie beispielsweise Phenoxyethanol, Phenoxypropanol, Glyoxal, Thiadiazine, 2,4-Dichlorbenzylalkohole und bevorzugt Isothiazolon-Derivate wie beispielsweise MIT (2-Methyl-3(2H)-isothiazolon), CMIT (5-Chlor-2-methyl-3(2H)-isothiazolon), CIT (5-Chlor-3(2H)-isothiazolon), BIT (1,2-Benzisothiazol-3(2H)-on), weiterhin Copolymere von N,N-Di-C₁-C₁₀-Alkyl-ω-amino-C₂-C₄-alkyl(meth)acrylat, insbesondere Copolymere von Ethylen mit N,N-Di-Methyl-2-aminoethyl(meth)acrylat,
Aktivkohle,
Farbmitteln wie beispielsweise Farbstoffen oder Pigmenten,
Riechstoffen wie beispielsweise Parfüm,
Geruchsfängern, beispielsweise Cyclodextrine.

Dazu kann man beispielsweise so vorgehen, dass man mindestens einen unmodifizierten Schaumstoff (a) in verschiedenen Arbeitsgängen oder vorzugsweise gleichzeitig mit wässriger Formulierung von Verbindung (b) und mit mindestens einem Zuschlagstoff (e) kontaktiert.

In einer Ausführungsform der vorliegenden Erfindung kann man wässriger Formulierung von Verbindung (b) einen oder mehrere Zuschlagstoffe (e) zusetzen, beispielsweise in Anteilen von 0 bis insgesamt 50 Gew.-%, bezogen auf (b), bevorzugt 0,001 bis 30 Gew.-%, besonders bevorzugt 0,01 bis 25 Gew.-%, ganz besonders bevorzugt 0,1 bis 20 Gew.-%.

Zur Herstellung von erfindungsgemäß verwendeten Formkörpern kann man weiterhin nach dem Einwirkenlassen von wässriger Formulierung von Verbindung (b) und gegebenenfalls Katalysator (d) und gegebenenfalls mindestens einem Zuschlagstoff (e) auf unmodifiziertem Schaumstoff (a) ein- oder mehrfach mechanisch komprimieren. Das mechanische Komprimieren kann man diskontinuierlich oder vorzugsweise kontinuierlich durchführen, diskontinuierlich beispielsweise durch Pressen oder Platten, kontinuierlich beispielsweise durch Walzen oder Kalander. Wenn man zu kalandrieren wünscht, so kann man einen oder mehrere Kalanderdurchgänge durchführen, beispielsweise einen bis zwanzig Kalanderdurchgänge, bevorzugt sind fünf bis zehn Kalanderdurchgänge.

In einer Ausführungsform der vorliegenden Erfindung komprimiert man mechanisch auf einen Verdichtungsgrad im Bereich von 1 : 1,2 bis 1 : 12, bevorzugt 1 : 2,5 bis 1 : 5.

In einer Ausführungsform der vorliegenden Erfindung kalandriert man vor dem Trocknen.

In einer Ausführungsform der vorliegenden Erfindung geht man so vor, dass man nach dem Kontaktieren und Einwirkenlassen von wässriger Formulierung von Verbindung (b) und gegebenenfalls Katalysator (d) und gegebenenfalls mindestens einem Zuschlagstoff (e) zunächst trocknet, danach mit Wasser befeuchtet und danach mechanisch komprimiert, beispielsweise kalandert.

In einer Ausführungsform der vorliegenden Erfindung kann man nach dem Kontaktieren und Einwirkenlassen von wässriger Formulierung von Verbindung (b) und gegebenenfalls Katalysator (d) und gegebenenfalls mindestens einem Zuschlagstoff (e) auf unmodifiziertem Schaumstoff (a) thermisch fixieren, und zwar vor oder nach dem mechanischen Komprimieren oder auch zwischen zwei mechanischen Kompressionsschritten. Man kann beispielsweise bei Temperaturen von 120 °C bis 250 °C über einen Zeitraum von 5 Sekunden bis 5 Minuten thermisch fixieren. Geeignete Apparaturen sind beispielsweise Mikrowellenöfen, Plattenpresswerke, mit Heißluftgebläsen, elektrisch oder mit Gasflammen beheizte Trockenschränke, beheizte Walzwerke oder kontinuierlich betriebene Trockeneinrichtungen.
Man kann vor dem thermischen Fixieren trocknen, wie vorstehend beschrieben.

In einer Ausführungsform der vorliegenden Erfindung kann man nach dem Kontaktieren und Einwirkenlassen von wässriger Formulierung von Verbindung (b) und gegebenenfalls Katalysator (d) und gegebenenfalls mindestens einem Zuschlagstoff (e) auf unmodifiziertem Schaumstoff (a) thermisch fixieren, und zwar nach oder vorzugsweise vor dem mechanischen Komprimieren oder auch zwischen zwei mechanischen Kompressionsschritten. Man kann beispielsweise bei Temperaturen von 150°C bis 200°C über einen Zeitraum von 30 Sekunden bis 5 Minuten thermisch fixieren. Geeignete Apparaturen sind beispielsweise Trockenschränke.

In einer speziellen Ausführungsform kombiniert man das mechanische Komprimieren und das thermische Fixieren, beispielsweise indem man Schaumstoff nach dem Einwirkenlassen und gegebenenfalls dem Trocknen ein- oder mehrfach über heiße Walzen oder Kalander führt oder ein- oder mehrfach zwischen heiße Platten presst. Natürlich kann man auch mehrfach kalandern und dabei ein- oder mehrfach mit kalten Walzen und ein- oder mehrfach mit heißen Walzen komprimieren. Unter heiß sollen im Zusammenhang mit der vorliegenden Erfindung Temperaturen im Bereich von 100 bis 250°C, bevorzugt 120 bis 200°C verstanden werden.

Weiterhin führt man mindestens einen formgebenden Schritt (c) durch. Dabei kann man das Kontaktieren mit wässriger Formulierung von mindestens einer Verbindung (b) und den formgebenden Schritt (c) in beliebiger Reihenfolge durchführen. Dabei ist es bevorzugt, zunächst mit wässriger Formulierung von Verbindung (b) zu kontaktieren und danach den formgebenden Schritt (c) durchzuführen.

In einer Ausführungsform der vorliegenden Erfindung führt man den formgebenden Schritt (c) mechanisch durch, beispielsweise durch Zermahlen, Schreddern, Granulieren, bevorzugt durch Zerreißen entsprechend größerer Teile, durch Stanzen oder durch Schneiden.

In einer anderen Ausführungsform der vorliegenden Erfindung stellt man unmodifizierten Schaumstoff (a) als Formkörper mit den eingangs definierten Abmessungen her, insbesondere kann man das Aufschäumen in Formen durchführen, so dass man Formkörper von unmodifziertem Schaumstoff (a) erhält, die man anschließend mit wässriger Formulierung von mindestens einer Verbindung (b) kontaktiert.

Ein weiterer Gegenstand der vorliegenden Erfindung sind Formkörper, die im Folgenden auch als erfindungsgemäße Formkörper bezeichnet werden, erhältlich nach dem vorstehend beschriebenen Verfahren.

In einer Ausführungsform der vorliegenden Erfindung sind erfindungsgemäße Formkörper im wesentlichen aus offenzelligem Schaumstoff, d.h. solche Schaumstoffe, in denen mindestens 50% aller Lamellen offen sind, bevorzugt 60 bis 100% und besonders bevorzugt 65 bis 99,8%, bestimmt nach DIN ISO 4590.

Erfindungsgemäße Formkörper haben eine Dichte im Bereich von 5 bis 1.000 kg/m³, bevorzugt 6 bis 500 kg/m³ und besonders bevorzugt im Bereich von 7 bis 300 kg/m³. Die Dichte des erfindungsgemäßen Schaumstoffs wird einerseits durch den Grad der Belegung mit Verbindung (b) und gegebenenfalls Katalysator (d) und gegebenenfalls mindestens einem Zuschlagstoff (e) beeinflusst und andererseits durch den Verdichtungsgrad des Ausgangsmaterials. Durch geeignete Wahl von Belegungs- und Verdichtungsgrad lassen sich Dichte und Härte oder Flexibilität wie gewünscht einstellen.

Erfindungsgemäße Formkörper enthalten vorzugsweise im Bereich von 0,1 bis 95 Gew.-%, bevorzugt 5 bis 30 Gew.-%, besonders bevorzugt 10 bis 25 Gew.-%, bezogen auf das Gewicht des entsprechenden unmodifizierten Schaumstoffs (a), an Feststoff aus (b).

In einer Ausführungsform der vorliegenden Erfindung handelt es sich bei offenzelligen Schaumstoffen (a) um Schaumstoffe aus synthetischem organischem Schaumstoff handelt, bevorzugt um Polyurethanschaumstoff oder Melaminschaumstoff.

In einer Ausführungsform der vorliegenden Erfindung kontaktiert man in Schritt (b) mit mindestens einer Verbindung der allgemeinen Formel I a oder I b 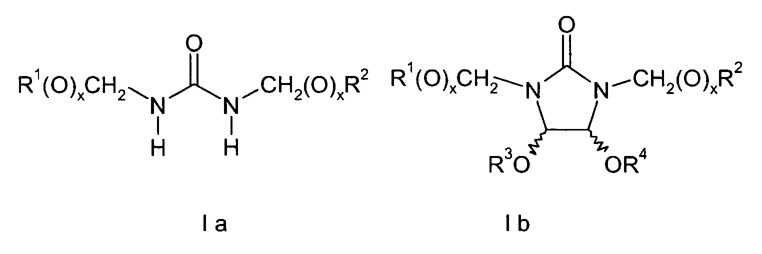 wobei die Variablen wie folgt definiert sind:
- R¹, R²: gleich oder verschieden und gewählt aus Wasserstoff, C₁-C₁₂-Alkyl, verzweigt oder unverzweigt, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
- x: gleich oder verschieden und eine ganze Zahl gewählt aus null und eins, wobei in Formel I a mindestens ein x gleich 1 gewählt wird,
- m: ist eine ganze Zahl im Bereich von 1 bis 20,
- R³, R⁴: gleich oder verschieden und gewählt aus Wasserstoff, C₁-C₁₂-Alkyl, verzweigt oder unverzweigt,
- R⁵: gleich oder verschieden und gewählt aus C₁-C₄-Alkyl und Wasserstoff.
Erfindungsgemäße Formkörper lassen sich beispielsweise als Staubbindemittel verwenden.

Erfindungsgemäße Formkörper lassen sich insbesondere in Staubsaugern verwenden, insbesondere in sogenannten Bagless-Staubsaugern, beispielsweise als Staubbindemittel.

Staubbindemittel im Sinne der vorliegenden Erfindung vermögen, Grobstaub zu binden und vorzugsweise auch den in den Staubsauger eingesaugten Feinstaub, partiell oder vorzugsweise zum überwiegenden Anteil, beispielsweise mehr als 50 Gew.-%.

Zur Verwendung von erfindungsgemäßen Formkörpern als Staubbindemittel kann man beispielsweise wie folgt vorgehen:
Man stellt einen Staubsauger bereit, insbesondere einen Bagless-Staubsauger, der ein Staubsammelgefäß aufweist, das sich im Luftstrom befindet. Das Staubsammelgefäß kann beispielsweise als Zyklon ausgebildet sein.

Man dosiert in einer Ausführungsform der vorliegenden Erfindung mehrere Formkörper direkt in das Staubsammelgefäß. Zur Dosierung nutzt man eine oder mehrere Zugabevorrichtungen, die innerhalb des Staubsaugers oder in einem Saugvorsatz integriert sein kann oder als externe Apparatur mit einer Aufnahmevorrichtung für das Staubsammelgefäß ausgebildet sein kann. Man benötigt also keine weiteren Wirkelemente im Staubsauger. Die Zugabevorrichtung bzw. die Zugabevorrichtungen kann beispielsweise als Klappe, Kolben, Schnecke oder Düse ausgebildet sein. Die Zugabe von Staubbindemittel kann direkt oder über eine Schleuse erfolgen.

In einer anderen Ausführungsform gibt man erfindungsgemäße Formkörper direkt in das Staubsammelgefäß und setzt das Staubsammelgefäß zusammen mit den Formkörpern in den Staubsauger.

In einer anderen Ausführungsform der vorliegenden Erfindung dosiert man Formkörper automatisch in das Staubsammelgefäß. Dabei werden kontinuierlich gewisse Anteile an Staubbindemittel dosiert und kontinuierlich entsprechende Mengen nachdosiert. Eine derartige automatische Nachdosierung kann man zusätzlich staubmengenabhängig durchführen.

Staubsammelgefäße können je nach Staubsaugertyp beliebige Form und beliebige Größe aufweisen. So können Staubsammelgefäße im Sinne der vorliegenden Erfindung würfelförmig, zylinderförmig, kegelförmig oder unregelmäßig geformt sein. Beispiele für geeignete Volumina sind 0,1 dm³ bis 2 dm³, aber auch größere Volumina bis zu 10 dm³ sind denkbar.

Das Staubsammelgefäß kann beispielsweise als Beutel oder Tüte ausgebildet sein, als Kasten oder wie ein Zyklon (Fliehkraftabscheider). Der Füllstand des Staubsammelgefäßes kann beispielsweise elektronisch oder mechanisch überwacht werden, beispielsweise mit Sensoren.

In einer anderen Ausführungsform, insbesondere bei Bagless-Staubsaugern, die keine Tüte enthalten, kann das Staubsammelgefäß als Kasten oder wie ein Zyklon ausgebildet sein.

In einer Ausführungsform der vorliegenden Erfindung enthält das Staubsammelgefäß eine Vorrichtung zum Durchmischen, beispielsweise eine mechanische Vorrichtung wie beispielsweise einen Rührer, oder einen Motor, der das Staubsammelgefäß in Bewegung versetzt, beispielsweise in Schwingungen oder Drehungen. In einer anderen Ausführungsform der vorliegenden Erfindung enthält das Staubsammelgefäß keine Vorrichtung zum Durchmischen.

In einer anderen speziellen Ausführungsform der vorliegenden Erfindung kann man erfindungsgemäße Formkörper flächig ausgestalten, beispielsweise als Tuch oder Matte oder Vlieslage, welches als Filter dient, um den Luftstrom des Staubsaugers zu reinigen, bevor der Luftstrom den Staubsauger verlässt und wieder in die Umgebung geblasen wird. Erfindungsgemäße flächig ausgestaltete Formkörper können eine Dicke im Bereich von 0,5 bis 1,5 cm haben. Dabei sind Länge und Breite von erfindungsgemäßen flächig ausgestalteten Formkörpern vorzugsweise deutlich größer als die Dicke, beispielsweise jeweils fünfmal so groß, bevorzugt mindestens zehnmal so groß. Länge und Breite können gleich oder verschieden groß sein.

In einer Ausführungsform der vorliegenden Erfindung weisen erfindungsgemäße flächige Formkörper eine Dicke im Bereich von 0,5 bis 1,5 cm und eine Länge und Breite jeweils im Bereich von 150 bis 250 mm, bevorzugt 170 bis 230 mm auf.

Die Oberfläche von erfindungsgemäßen flächigen Formkörpern kann ohne weitere Veränderungen ausgestaltet sein oder aber plissiert.

Erfindungsgemäße flächige Formkörper können in erfindungsgemäßen Staubsaugern nach an sich bekannten Methoden fixiert werden, beispielsweise mit einem Filterrahmen oder in luftdurchlässigen oder luftundurchlässigen Staubsammelgefäßen. Erfindungsgemäße flächige Formkörper können in erfindungsgemäßen Staubsaugern beispielsweise als Tiefenfilter oder Flächenfilter eingesetzt werden oder - je nach Porendurchmesser - als Vorfilter oder Endfilter.

In einer Ausführungsform der vorliegenden Erfindung füllt man das Staubsammelgefäß zu 10 bis 60 Vol.-% mit erfindungsgemäßen Formkörpern, bevorzugt zu 25 bis 50 Vol.-%.

In einer Ausführungsform der vorliegenden Erfindung vermögen erfindungsgemäße Formkörper bis zu 3000 Gew.-% Staub zu binden, bezogen auf ihr eigenes Gewicht, beispielsweise 500 bis 3000 Gew.-%. Das Staubbindevermögen kann man beispielsweise gravimetrisch bestimmen.

Ein weiterer Gegenstand der vorliegenden Erfindung sind Staubsauger, insbesondere Bagless-Staubsauger, umfassend mindestens einen erfindungsgemäßen Formkörper. Ein weiterer Gegenstand der vorliegenden Erfindung sind Staubsauger, insbesondere Bagless-Staubsauger, umfassend mindestens einen erfindungsgemäßen flächigen Formkörper.

Bevorzugt sind Bagless-Staubsauger, umfassend mindestens einen erfindungsgemäßen Formkörper, im Folgenden auch als erfindungsgemäße Bagless-Staubsauger bezeichnet. Beim Betreiben des erfindungsgemäßen Bagless-Staubsaugers wird bzw. werden erfindungsgemäße Formkörper im Zyklon zusammen mit dem Staub verwirbelt. Der bzw. die erfindungsgemäßen Formkörper arbeiten in dieser Anwendung praktisch als Staubbindemittel (Staubfänger), insbesondere für u. U. allergieauslösenden Feinstaub. Durch das gemeinsame Verwirbeln von Staub und erfindungsgemäßem Formkörper haften die Staubpartikel an erfindungsgemäßem Formkörper und sind demzufolge nicht mehr frei beweglich, d. h. sie können beim Ausleeren des Zyklons nicht mehr als Staubwolke aufwirbeln. Sie fallen stattdessen zusammen mit erfindungsgemäßem Formkörper auf den Boden. In dieser Anwendung kommen im wesentlichen die Oberflächeneigenschaften (Adsorption) der erfindungsgemäßen Formkörper zum Einsatz. Ihre vorteilhaften Filtereigenschaften sind in diesem Fall eher sekundär.

Des weiteren besteht die Möglichkeit, erfindungsgemäße Formkörper auch im oder als Feinstaubfilter zu verwenden, um dessen Standzeit zu verlängern; gleiches gilt für Staubbeutel.

Ein weiterer Gegenstand der vorliegenden Erfindung ist ein Verfahren zur Herstellung von Formkörpern, im Folgenden auch erfindungsgemäßes Herstellverfahren genannt, umfassend
(a) Bereitstellen eines offenzelligen Schaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und
(c) Durchführen eines formgebenden Schrittes, durch den die betreffenden Formkörper Abmessungen im Bereich von Länge·Breite·Höhe jeweils im Bereich von 1 mm bis 3 cm erhalten, wobei mindestens eine Dimension größer ist als 5,5 mm,
   wobei das Kontaktieren mit wässriger Formulierung von mindestens einer Verbindung (b) und der formgebende Schritt (c) in beliebiger Reihenfolge durchgeführt werden können.

Ein weiterer Gegenstand der vorliegenden Erfindung ist ein Verfahren zur Herstellung von flächigen Formkörpern mit einer Dicke im Bereich von 0,5 bis 1,5 cm, im Folgenden ebenfalls unter dem Begriff "erfindungsgemäßes Herstellverfahren" subsummiert, umfassend
(a) Bereitstellen eines offenzelligen Schaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und
(c) Durchführen eines formgebenden Schrittes,
   wobei das Kontaktieren mit wässriger Formulierung von mindestens einer Verbindung (b) und der formgebende Schritt (c) in beliebiger Reihenfolge durchgeführt werden können.

Einzelheiten zum erfindungsgemäßen Herstellverfahren sind vorstehend aufgeführt.

Ein weiterer Gegenstand der vorliegenden Erfindung ist ein Verfahren zum Reinigen von Oberflächen, insbesondere Fußböden, unter Verwendung von erfindungsgemäßen Staubsaugern, im Folgenden auch erfindungsgemäßes Reinigungsverfahren genannt. Zur Durchführung des erfindungsgemäßen Reinigungsverfahrens kann man wie an sich bekannt vorgehen. Durch die Verwendung von einem oder mehreren erfindungsgemäßen Staubsauger(n) wird sehr reine Abluft produziert und nur wenig Feinstaub verwirbelt.

Die Erfindung wird durch Arbeitsbeispiele erläutert. In den Arbeitsbeispielen wurde jeweils mit Mineral-Teststaub "Schiefermehl" mit Korndurchmesserband < 200 µm und dem 50%-Wert < 30 µm getestet. Man kann jedoch auch anderen Staub einsetzen, zum Beispiel Hausstaub, Staub aus dem Garten, Sand, Mehl (Küchenstaub), Blütenpollen und Ruß.

### Arbeitsbeispiele

### I.1 Herstellung von unmodifiziertem Schaumstoff (a)

In einem offenen Gefäß wurde ein sprühgetrocknetes Melamin/Formaldehyd-Vorkondensat (Molverhältnis 1:3, Molekulargewicht etwa 500 g/mol) zu einer wässerigen Lösung mit 3 Gew.-% Ameisensäure und 1,5 % des Natriumsalzes eines Gemisches von Alkylsulfonaten mit 12 bis 18 C-Atomen im Alkylrest (Emulgator K 30 der Fa. Bayer AG), wobei die Prozentzahlen auf das Melamin/Formaldehyd-Vorkondensat bezogen sind, gegeben. Die Konzentration des Melamin/Formaldehyd-Vorkondensats, bezogen auf die gesamte Mischung aus Melamin/Formaldehyd-Vorkondensat und Wasser, betrug 74 Gew.-%. Die so erhältliche Mischung wurde kräftig gerührt, dann wurden 20 Gew.-% n-Pentan zugegeben. Es wurde so lange (etwa 3 min lang) weitergerührt, bis eine homogen aussehende Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaumstoff die Siedetemperatur des n-Pentans ein, die unter diesen Bedingungen bei 37,0 °C liegt. Nach 7 bis 8 min war die maximale Steighöhe des Schaumstoffs erreicht. Der Schaumstoff wurde noch weitere 10 min bei 150 °C im Trockenschrank belassen; anschließend wurde er 30 min lang bei 180° C getempert. Man erhielt unmodifizierten Schaumstoff (a.1).

Es wurden am unmodifizierten Schaumstoff (a.1) aus Beispiel I.1 die folgenden Eigenschaften ermittelt:
99,6% offenzellig nach DIN ISO 4590,
Stauchhärte (40%) 1,3 kPa bestimmt nach DIN 53577,
Dichte 7,6 kg/m³ bestimmt nach EN ISO 845,
mittlerer Porendurchmesser 210 µm, bestimmt durch Auswertung mikroskopischer Aufnahmen an Schnitten,
BET-Oberfläche von 6,4 m²/g, bestimmt nach DIN 66131,
Schallabsorption von 93 %, bestimmt nach DIN 52215,
Schallabsorption von mehr als 0,9, bestimmt nach DIN 52212.

### 1.2 Herstellung von modifizierten Schaumstoffen

### I.2.1 Herstellung eines modifizierten Schaumstoffs

Man schnitt unmodifizierten Schaumstoff (a.1) aus Beispiel I.1 zu Schaumstoffquadern mit den Abmessungen 9 cm·4 cm·4 cm. Die Schaumstoffquader wogen im Bereich von 1,00 bis 1,33 g. Anschließend kontaktierte man mehrere unmodifizierte Schaumstoffstücke mit einem Gewicht gemäß Tabelle 1 mit einer wässrigen Dispersion, enthaltend 81 g/l N,N'-Dimethyl-4,5-dihydroxyimidazolinon (I b.1 ) und 18 g/l MgCl₂·6 H₂O, 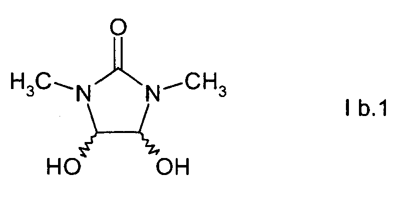 indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 8 mm aufwiesen und sich mit einer Geschwindigkeit von 32 Umdrehungen/min drehten. Dadurch wurde eine Flottenaufnahme von 520 Gew.-% erreicht.

Danach trocknete man über einen Zeitraum von 4 Stunden bei 80°C im Trockenschrank. Anschließend wurde im Trockenschrank 10 Minuten bei 150 °C thermisch fixiert. Man erhielt modifizierten Schaumstoff S1.1.

### I.2.2 Herstellung von modifiziertem Schaumstoff S1.2

Das Experiment gemäß I.2.1 wurde wiederholt, jedoch kontaktierte man mit einer wässrigen Dispersion von
120 g/l (I b.1) und
106,8 g/l MgCl₂·6 H₂O.
Man entnahm die Schaumstoffquader sofort nach dem Eintauchen, quetschte wie oben beschrieben ab und erreichte eine Flottenaufnahme von 540 Gew.-%. Anschließend fixierte man thermisch ohne vorheriges Trocknen 15 Minuten bei 150 °C im Trockenschrank.
Man erhielt modifizierten Schaumstoff S1.2.

### 1.2.3 Herstellung von modifiziertem Schaumstoff S2.1

Man besprühte Quader (Abmessungen: 9 cm·4 cm·4 cm ) von unmodifiziertem Schaumstoff (a.1) mit dem 3,9-fachen einer wässrigen Dispersion, enthaltend 112,5 g/l (I b.2) und
61,4 g/l MgCl₂·6 H₂O.
Man ließ 2 Minuten einwirken, quetschte anschließend wie unter 1.2 beschrieben ab und fixierte thermisch 20 Minuten bei 140°C im Trockenschrank. Man erreichte eine Flottenaufnahme von 425 Gew.-%. 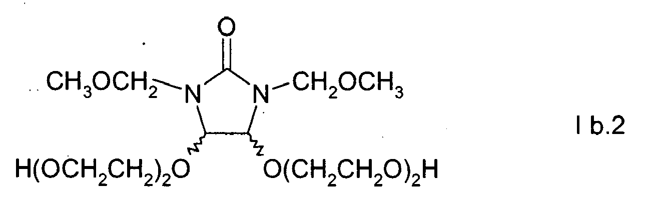 Man erhielt modifizierten Schaumstoff S2.1.

### 1.2.4 Herstellung von modifizierten Schaumstoff S2.2

Man kontaktierte mehrere unmodifizierte Schaumstoffstücke aus Beispiel I.1 mit einem Gewicht gemäß Tabelle 1 mit einer wässrigen Dispersion, enthaltend
112,5 g/l (I b.2) und
61,4 g/l M₉Cl₂·6 H₂O,
indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 8 mm aufwiesen und sich mit einer Geschwindigkeit von 32 Umdrehungen/min drehten. Dadurch wurde eine Flottenaufnahme von 110 Gew.-% erreicht.

Danach trocknete man über einen Zeitraum von einer Stunde bei 80°C im Trockenschrank. Anschließend wurde im Trockenschrank 10 Minuten bei 160 °C thermisch fixiert. Man erhielt modifizierten Schaumstoff S2.2.

### 1.2.5 Herstellung von modifizierten Schaumstoff S2.3

Man kontaktierte mehrere unmodifizierte Schaumstoffstücke aus Beispiel I.1 mit einem Gewicht gemäß Tabelle 1 mit einer wässrigen Dispersion, enthaltend
60 g/l (I b.2) und
25 g/l MgCl₂·6 H₂O,
indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende
Walzen führte, die einen Durchmesser von 150 mm und einen Abstand von 6 mm aufwiesen und sich mit einer Geschwindigkeit von 32 Umdrehungen/min drehten. Dadurch wurde eine Flottenaufnahme von 273 Gew.-% erreicht.
Danach fixierte man thermisch im Trockenschrank 10 Minuten bei 150 °C (ohne vorheriges Trocknen). Man erhielt modifizierten Schaumstoff S2.3.

### 1.2.6 Herstellung von modifizierten Schaumstoff S2.4

Man ging vor wie in Beispiel II.4 beschrieben, jedoch trocknete man vor dem Fixieren 2 Stunden bei 80°C im Trockenschrank und fixierte thermisch 5 Minuten bei 180°C. Man erhielt modifizierten Schaumstoff S2.4.

**Tabelle 1: Modifizierte Schaumstoffe (Angabe in Gew.-% bezogen auf das Gewicht des unmodifizierten Schaumstoffs)**

| (b) | Modifizierter Schaumstoff Nr. | Gewicht unmodifizierter Schaumstoffquader [g] | Gewicht modifizierter Schaumstoff [g] | Δ [Gew.-%] |
|---|---|---|---|---|
| (b I.1) | S1.1 | 1,09 | 1,57 | 44 |
| (b I.1) | S1.2 | 1,21 | 2,0 | 65 |
| (b I.2) | S2.1 | 1,13 | 1,67 | 48 |
| (b I.2) | S2.2 | 1,22 | 1,37 | 12 |
| (b I.2) | S2.3 | 1,15 | 1,32 | 15 |
| (b I.2) | S2.4 | 1,11 | 1,41 | 27 |

### II. Herstellung von erfindungsgemäßen Formkörpern

Aus einem Schaumstoffstück von S2.3, das als Matte mit einer Dicke von 3 cm ausgestaltet war, wurden mit Hammer und Henkellocheisen erfindungsgemäße Formkörper ausgestanzt: Zylinder mit einem Durchmesser von 5 mm und einer Höhe von 1 cm (F.1) und Zylinder mit einem Durchmesser von 10 mm und einer Höhe von 3 cm (F.2).

### III. Verwendung als Staubbindemittel

Ein erfindungsgemäßer Formkörper gemaß II. und 40 g Mineral-Teststaub "Schiefermehl" wurde in einen Zyklon mit den Außen-Abmessungen (Höhe = 260 mm, Durchmesser = 150 mm) gefüllt und mit einem Luftstrom mit der Geschwindigkeit 20 m/s über einen Zeitraum von einer Minute verwirbelt. Dabei kollidierten die Mineral-Teststaubpartikel mit dem erfindungsgemäßen Formkörper und wurden adsorbiert. Anschließend wurde die Gewichtszunahme der mit Mineral-Teststaub beladenen erfindungsgemäßen Formkörper gravimetrisch ermittelt. Man fand, dass das Gewicht von erfindungsgemäßem Formkörper etwa um den Faktor 15 zugenommen hatte. Mittels Streulichtverfahren ließen sich weitere Aussagen machen bezüglich der Partikeldurchmesser von adsorbiertem Mineral-Teststaub (s. Tabelle 2) und der chemischen Beschaffenheit (anorganische oder organische Natur). Erfindungsgemäße Formkörper zeigten ein ausgezeichnetes Staubbindevermögen beispielsweise im Vergleich zu Formkörpern aus nicht modifiziertem Schaumstoff (a.1) derselben Gestalt.

**Tabelle 2: Partikeldurchmesserverteilung von adsorbiertem Mineral-Teststaub, rel. Gewichtszunahme der Probe: 15-fach.**

| Korngrenzen [µm] | Gewichtsprozent |
|---|---|
| 0,5 - 1 | 50,05 |
| 1 -2 | 33,82 |
| 2 - 3 | 6,49 |
| 3 - 4 | 4,14 |
| 4 - 5 | 2,41 |
| 5 - 6 | 1,08 |
| 6 - 150 | 2,01 |

## Patentansprüche

1. Verwendung von Formkörpern mit Abmessungen Länge·Breite·Höhe jeweils im Bereich von 1 mm bis 3 cm, wobei mindestens eine Dimension größer ist als 5,5 mm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
als Staubbindemittel in Staubsaugern.

2. Verwendung von flächigen Formkörpern mit einer Dicke im Bereich von 0,5 bis 1,5 cm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
als Staubbindemittel in Staubsaugern.

3. Verwendung nach Anspruch 1 oder 2, **dadurch gekennzeichnet, dass** mindestens eine Verbindung aus Schritt (b) nicht bei der Herstellung von offenzelligem Schaumstoff (a) eingesetzt worden ist.

4. Verwendung nach einem der Ansprüche 1 bis 3, **dadurch gekennzeichnet, dass** es sich bei offenzelligen Schaumstoffen (a) um Schaumstoffe aus synthetischem organischem Schaumstoff handelt.

5. Verwendung nach einem der Ansprüche 1 bis 4, **dadurch gekennzeichnet, dass** es sich bei offenzelligen Schaumstoffen (a) um Polyurethanschaumstoffe oder um Aminoplastschaumstoffe handelt.

6. Verwendung nach einem der Ansprüche 1 bis 5, **dadurch gekennzeichnet, dass** man in Schritt (b) mit mindestens einer Verbindung der allgemeinen Formel I a bis I b 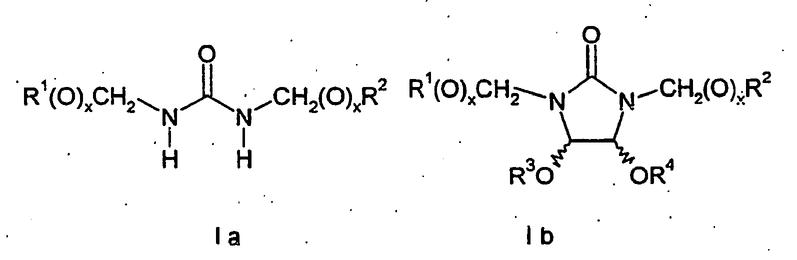 kontaktiert, wobei die Variablen wie folgt definiert sind:
R¹, R² gleich oder verschieden und gewählt aus Wasserstoff, C₁-C₁₂-Alkyl, ver- zweigt oder unverzweigt, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
x gleich oder verschieden und eine ganze Zahl gewählt aus null und eins, wobei in Formel I a mindestens ein x gleich 1 gewählt wird,
m ist eine ganze Zahl im Bereich von 1 bis 20,
R³, R⁴ gleich oder verschieden und gewählt aus Wasserstoff, C₁-C₁₂-Alkyl, ver- zweigt oder unverzweigt,
R⁵ gleich oder verschieden und gewählt aus C₁-C₄-Alkyl und Wasserstoff.

7. Verwendung nach einem der Ansprüche 1 bis 6, **dadurch gekennzeichnet, dass** der formgebende Schritt (c) gewählt ist aus Zerreißen, Stanzen oder Schneiden.

8. Formkörper mit den Abmessungen Länge·Breite·Höhe jeweils im Bereich von 1 mm bis 3 cm, wobei mindestens eine Dimension größer ist als 5,5 mm, erhältlich durch
(a) Bereitstellen eines offenzelligen Schaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
wobei das Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder cpoxidgruppenhaltiges Comonomer ein polymerisiert enthält, und der formgebende Schritt in beliebiger Reihenfolge durchgeführt werden können.

9. Flächige Formkörper nach Auspruch 8 mit einer Dicke im Bereich von 0,5 bis 1,5 cm, hergestellt durch Behandeln von
(a) offenzelligem Schaumstoff mit einer Dichte im Bereich von 5 bis 500 kg/m³ und einem mittleren Porendurchmesser im Bereich von 1 µm bis 1 mm
(b) mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält,
(c) und einem formgebenden Schritt,
wobei das Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgrupperihaltiges Comonomer ein polymerisiert enthält, und der formgebende Schritt in beliebiger Reihenfolge durchgeführt werden können.

10. Formkörper nach Anspruch 8 oder 9, **dadurch gekennzeichnet, dass** es sich bei offenzelligen Schaumstoffen (a) um Schaumstoffe aus synthetischem organischem Schaumstoff handelt.

11. Formkörper nach einem der Ansprüche 8 bis 10, **dadurch gekennzeichnet, dass** es sich bei offenzelligen Schaumstoffen (a) um Polyurethanschaumstoffe oder um Aminoplastschaumstoffe handelt.

12. Formkörper nach einem der Ansprüche 8 bis 11, **dadurch gekennzeichnet, dass** man in Schritt (b) mit mindestens einer Verbindung der allgemeinen Formel I a oder I b 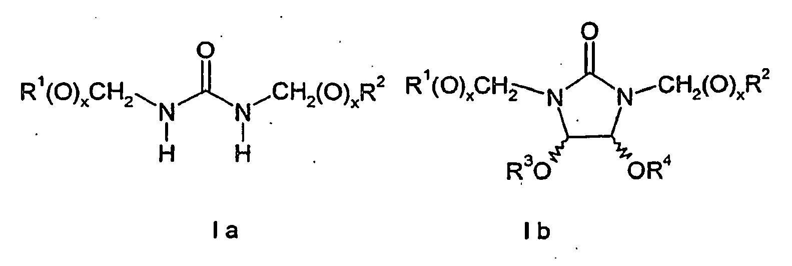 kontaktiert, wobei die Variablen wie folgt definiert sind:
R¹, R² gleich oder verschieden und gewählt aus Wasserstoff, C₁-C₁₂-Alkyl, ver- zweigt oder unverzweigt, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-P)ₘ-R⁵, (-CH₂-CH₂-CH₂-CH₂-O)ₘ-R⁵,
x gleich oder verschieden und eine ganze Zahl gewählt aus null und eins, wobei in Formel I a mindestens ein x gleich 1 gewählt wird,
m ist eine ganze Zahl im Bereich von 1 bis 20,
R³, R⁴ gleich oder verschieden und gewählt aus Wasserstoff, C₁-C₁₂-Alkyl, ver- zweigt oder unverzweigt,
R⁵ gleich oder verschieden und gewählt aus C₁-C₄-Alkyl und Wasserstoff.

13. Verwendung von Formkörpern nach einem der Ansprüche 8 bis 12 als Staubbindemittel.

14. Verwendung von Formkörpern nach einem der Ansprüche 8 bis 12 in Staubsaugern.

15. Staubsauger, umfassend mindestens einen Formkörper nach einem der Ansprüche 8 bis 12.

16. Verfahren zur Herstellung von Formkörpern, umfassend
(a) Bereitstellen eines offenzelligen Schaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und
(c) Durchführen eines formgebenden Schrittes, durch den die betreffenden Formkörper Abmessungen im Bereich von Länge·Breite·Höhe jeweils im Bereich von 1 mm bis 3 cm erhalten, wobei mindestens eine Dimension größer ist als 5,5 mm,
wobei das Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und der formgebende Schritt in beliebiger Reihenfolge durchgeführt werden können.

17. Verfahren zur Herstellung von flächigen Formkörpern mit einer Dicke im Bereich von 0,5 bis 1,5 cm, umfassend
(a) Bereitstellen eines offenzelligen Schaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einer Verbindung mit mindestens einer Halbaminal- oder Aminalgruppe pro Moleküi oder mindestens einem Copolymer, das mindestens ein OH-gruppenhaltiges oder β-Dicarbonylgruppen-haltiges oder Epoxidgruppenhaltiges Comonomer einpolymerisiert enthält, und
(c) Durchführen eines formgebenden Schrittes,
wobei das Kontaktieren mit wässriger Formulierung von mindestens einer Verbindung mit mindestens einer Halbaminal- oder Aminalgruppe pro Molekül oder mindestens einem Copolymer, das mindestens ein OH-gruppenhaltiges oder β-Dicarbonylgruppen-haltiges oder Epoxidgruppenhaltiges Comonomer einpolymerisiert enthält, und der formgebende Schritt in beliebiger Reihenfolge durchgeführt werden können.

18. Verfahren zur Reinigung von Oberflächen unter Verwendung von mindestens einem Staubsauger nach Anspruch 15.

19. Verfahren nach Anspruch 18, **dadurch gekennzeichnet, dass** es sich bei Oberflächen um Fußböden handelt.

## Claims

1. The use of moldings whose length · width · height dimensions are always in the range from 1 mm to 3 cm, at least one dimension being greater than 5.5 mm, produced by treatment of
(a) open-cell foam whose density is in the range from 5 to 500 kg/m³ and whose average pore diameter is in the range from 1 µm to 1 mm
(b)with an aqueous formulation of at least one compound having at least one hemiaminal or aminal group per molecule or at least one copolymer containing at least one copolymerized comonomer which contains OH groups or which contains β-dicarbonyl groups, or which contains epoxy groups,
(c)and a shaping step,
as dust binders in vacuum cleaners.

2. The use of sheet-like moldings whose thickness is in the range from 0.5 to 1.5 cm, produced by treatment of
(a) open-cell foam whose density is in the range from 5 to 500 kg/m³ and whose average pore diameter is in the range from 1 µm to 1 mm
(b) with an aqueous formulation of at least one compound having at least one hemiaminal or aminal group per molecule or at least one copolymer containing at least one copolymerized comonomer which contains OH groups or which contains β-dicarbonyl groups, or which contains epoxy groups,
(c) and a shaping step,
as dust binders in vacuum cleaners.

3. The use according to claim 1 or 2, wherein at least one compound from step (b) has not been used during the production of open-cell foam (a).

4. The use according to any of claims 1 to 3, wherein open-cell foams (a) involve foams composed of synthetic organic foam.

5. The use according to any of claims 1 to 4, wherein open-cell foams (a) involve polyurethane foams or aminoplastic foams.

6. The use according to any of claims 1 to 5, wherein, in step (b), there is contact with at least one compound of the general formula I a to I b 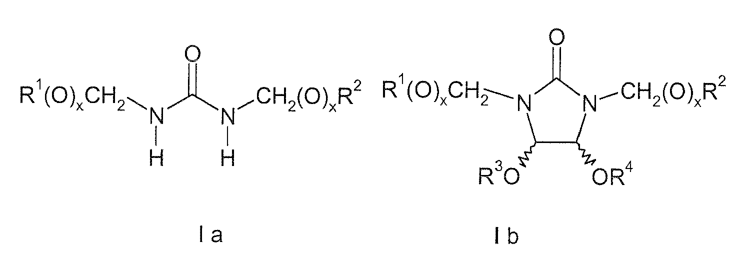 where the variables are defined as follows:
R¹ and R² are identical or different, and are selected from hydrogen, C₁-C₁₂-alkyl, branched or unbranched, (-CH₂-CH₂-O)ₘ-R⁵, (-CHCH₃-CH₂- O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
x is identical or different and is a whole number selected from zero and one, at least one x in formula I a being selected to be equal to one,
m is a whole number in the range from 1 to 20,
R³ and R⁴ are identical or different, and are selected from hydrogen and C₁-C₁₂-alkyl, branched or unbranched, and
R⁵ is identical or different, and is selected from C₁-C₄-alkyl and hydrogen.

7. The use according to any of claims 1 to 6, wherein the shaping step (c) has been selected from lacerating, stamping, and cutting.

8. A molding whose length · width · height dimensions are always in the range from 1 mm to 3 cm, at least one dimension being greater than 5.5 mm, obtainable by
(a)provision of an open-cell foam whose density is in the range from 5 to 500 kg/m³, and whose average pore diameter is in the range from 1 µm to 1 mm,
(b) contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups,
(c)and a shaping step,
where the contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups, and the shaping step can be carried out in any desired sequence.

9. A sheet-like molding according to claim 8 whose thickness is in the range from 0.5 to 1.5 cm, produced by treatment of
(a) open-cell foam whose density is in the range from 5 to 500 kg/m³ and whose average pore diameter is in the range from 1 µm to 1 mm
(b) with an aqueous formulation of at least one compound having at least one hemiaminal or aminal group per molecule or at least one copolymer containing at least one copolymerized comonomer which contains OH groups or which contains β-dicarbonyl groups, or which contains epoxy groups,
(c) and a shaping step,
where the contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups, and the shaping step can be carried out in any desired sequence.

10. The molding according to claim 8 or 9, wherein open-cell foams (a) involve foams composed of synthetic organic foam.

11. The molding according to any of claims 8 to 10, wherein open-cell foams (a) involve polyurethane foams or aminoplastic foams.

12. The molding according to any of claims 8 to 11, wherein, in step (b), there is contact with at least one compound of the general formula I a or I b 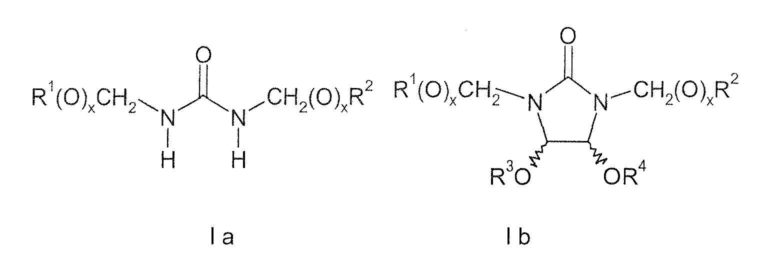 where the variables are defined as follows:
R¹ and R² are identical or different, and are selected from hydrogen, C₁-C₁₂-alkyl, branched or unbranched, (-CH₂-CH₂-O)ₘ-R⁵, (-CHCH₃-CH₂- O)ₘ-R⁵, (-CH₂-CHCH₃-O)ₘ-R⁵, (-CH₂-CH₂-CH₂-O)m-R⁵, (-CH₂-CH₂-CH₂-CH₂-O)ₘ-R⁵,
x is identical or different and is a whole number selected from zero and one, at least one x in formula I a being selected to be equal to one,
m is a whole number in the range from 1 to 20,
R³ and R⁴ are identical or different, and are selected from hydrogen and C₁-C₁₂-alkyl, branched or unbranched, and
R⁵ is identical or different, and is selected from C₁-C₄-alkyl and hydrogen.

13. The use of moldings according to any of claims 8 to 12 as dust binders.

14. The use of moldings according to any of claims 8 to 12 in vacuum cleaners.

15. A vacuum cleaner, comprising at least one molding according to any of claims 8 to 12.

16. A process for the production of moldings, comprising
(a)provision of an open-cell foam whose density is in the range from 5 to 500 kg/m³ and whose average pore diameter is in the range from 1 µm to 1 mm,
(b) contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups, and
(c)carrying out a shaping step, by which the relevant moldings obtain length · width · height dimensions that are always in the range from 1 mm to 3 cm, at least one dimension being greater than 5.5 mm,
where the contact with an aqueous formulation of at least one compound having at least one hemiaminal or aminal group per molecule or at least one copolymer containing at least one copolymerized comonomer which contains OH groups or which contains β-dicarbonlyl groups, or which contains epoxy groups, and the shaping step can be carried out in any desired sequence.

17. A process for the production of sheet-like moldings whose thickness is in the range from 0.5 to 1.5 cm, comprising
(a) provision of an open-cell foam whose density is in the range from 5 to 500 kg/m³, and whose average pore diameter is in the range from 1 µm to 1 mm,
(b) contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups, and
(c) carrying out a shaping step,
where the contact with an aqueous formulation of at least one compound having at least one hemiaminal or aminal group per molecule or at least one copolymer containing at least one copolymerized comonomer which contains OH groups or which contains β-dicarbonyl groups, or which contains epoxy groups, and the shaping step can be carried out in any desired sequence.

18. A process for the cleaning of surfaces, using at least one vacuum cleaner according to claim 15.

19. The process according to claim 18, wherein surfaces involve floors.

## Revendications

1. Utilisation de corps façonnés présentant des dimensions longueur-largeur-hauteur à chaque fois dans la plage de 1 mm à 3 cm, au moins une dimension étant supérieure à 5,5 mm, fabriqués par
(a) traitement de mousse à pores ouverts présentant une densité dans la plage de 5 à 500 kg/m³ et un diamètre moyen des pores dans la plage de 1 µm à 1 mm
(b) avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée,
(c) et une étape de façonnage,
comme agent liant les poussières dans des aspirateurs.

2. Utilisation de corps façonnés plats présentant une épaisseur dans la plage de 0,5 à 1,5 cm, fabriqués par
(a) traitement de mousse à pores ouverts présentant une densité dans la plage de 5 à 500 kg/m³ et un diamètre moyen des pores dans la plage de 1 µm à 1 mm
(b) avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée,
(c) et une étape de façonnage,
comme agent liant les poussières dans des aspirateurs.

3. Utilisation selon la revendication 1 ou 2, **caractérisée en ce qu'**au moins un composé de l'étape (b) n'a pas été utilisé lors de la fabrication de la mousse à pores ouverts (a).

4. Utilisation selon l'une quelconque des revendications 1 à 3, **caractérisée en ce qu'**il s'agit, pour les mousses à pores ouverts (a), de mousses en mousse synthétique organique.

5. Utilisation selon l'une quelconque des revendications 1 à 4, **caractérisée en ce qu'**il s'agit, pour les mousses à pores ouverts (a), de mousses de polyuréthane ou de mousses d'aminoplaste.

6. Utilisation selon l'une quelconque des revendications 1 à 5, **caractérisée en ce que** dans l'étape (b), on met en contact avec au moins un composé de formule générale Ia ou Ib 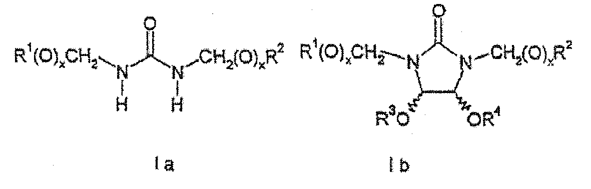 les variables étant définies comme suit :
R¹, R² sont identiques ou différents et choisis parmi hydrogène, C₁-C₁₂-alkyle, ramifié ou non ramifié, (-CH₂-CH₂-O)ₘ-R⁵, (-CHCH₃-CH₂-O)ₘ-R⁵, (-CH₂-CHCH₃-O)ₘ- R⁵, (-CH₂-CH₂-CH₂-O)ₘ-R⁵, (-CH₂-CH₂-CH₂-CH₂-O)ₘ-R⁵,
x sont identiques ou différents et représentent un nombre entier choisi parmi zéro et un, où, dans la formule Ia, au moins un x vaut 1,
m représente un nombre entier de la plage de 1 à 20,
R³, R⁴ sont identiques ou différents et choisis parmi hydrogène, C₁-C₁₂-alkyle, ramifié ou non ramifié
R⁵ sont identiques ou différents et choisis parmi C₁- C₄-alkyle et hydrogène.

7. Utilisation selon l'une quelconque des revendications 1 à 6, **caractérisée en ce que** l'étape de façonnage (c) est choisie parmi le déchirement, l'estampage ou le découpage.

8. Corps façonnés présentant des dimensions longueur-largeur-hauteur à chaque fois dans la plage de 1 mm à 3 cm, au moins une dimension étant supérieure à 5,5 mm, pouvant être obtenus par
(a) mise à disposition d'une mousse à pores ouverts présentant une densité dans la plage de 5 à 500 kg/m³ et un diamètre moyen des pores dans la plage de 1 µm à 1 mm,
(b) mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée,
(c) et une étape de façonnage,
où la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et l'étape de façonnage peuvent être réalisées dans un ordre quelconque.

9. Corps façonnés plats selon la revendication 8 présentant une épaisseur dans la plage de 0,5 à 1,5 cm, fabriqués par
(a) traitement de mousse à pores ouverts présentant une densité dans la plage de 5 à 500 kg/m³ et un diamètre moyen des pores dans la plage de 1 µm à 1 mm
(b) avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée,
(c) et une étape de façonnage,
où la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et l'étape de façonnage peuvent être réalisées dans un ordre quelconque.

10. Corps façonnés selon la revendication 8 ou 9, **caractérisés en ce qu'**il s'agit, pour les mousses à pores ouverts (a), de mousses en mousse synthétique organique.

11. Corps façonnés selon l'une quelconque des revendications 8 à 10, **caractérisés en ce qu'**il s'agit, pour les mousses à pores ouverts (a), de mousses de polyuréthane ou de mousses d'aminoplaste.

12. Corps façonnés selon l'une quelconque des revendications 8 à 11, **caractérisés en ce que** dans l'étape (b), on met en contact avec au moins un composé de formule générale Ia ou Ib 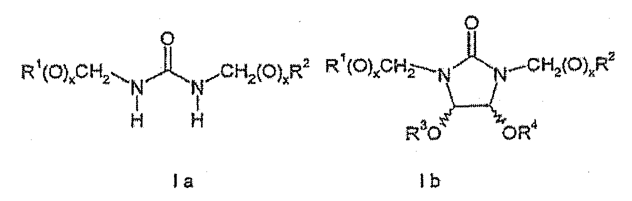 les variables étant définies comme suit :
R¹, R² sont identiques ou différents et choisis parmi hydrogène, C₁-C₁₂-alkyle, ramifié ou non ramifié, (-CH₂-CH₂-O)ₘ-R⁵, (-CHCH₃-CH₂-O)ₘ-R⁵, (-CH₂-CHCH₃-O)ₘ- R⁵, (-CH₂-CH₂-CH₂-O)ₘ-R⁵, (-CH₂-CH₂-CH₂-CH₂-O)ₘ-R⁵,
x sont identiques ou différents et représentent un nombre entier choisi parmi zéro et un, où, dans la formule Ia, au moins un x vaut 1,
m représente un nombre entier de la plage de 1 à 20,
R³, R⁴ sont identiques ou différents et choisis parmi hydrogène, C₁-C₁₂-alkyle, ramifié ou non ramifié
R⁵ sont identiques ou différents et choisis parmi C₁- C₄-alkyle et hydrogène.

13. Utilisation de corps façonnés selon l'une quelconque des revendications 8 à 12 comme agent liant les poussières.

14. Utilisation de corps façonnés selon l'une quelconque des revendications 8 à 12 dans des aspirateurs.

15. Aspirateur, comprenant au moins un corps façonné selon l'une quelconque des revendications 8 à 12.

16. Procédé de fabrication de corps façonnés, comprenant
(a) la mise à disposition d'une mousse à pores ouverts présentant une densité dans la plage de 5 à 500 kg/m³ et un diamètre moyen des pores dans la plage de 1 µm à 1 mm,
(b) la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et
(c) la réalisation d'une étape de façonnage, grâce à laquelle les corps façonnés concernés obtiennent des dimensions dans la plage longueur-largeur hauteur à chaque fois dans la plage de 1 mm à 3 cm, où au moins une dimension est supérieure à 5,5 mm,
où la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et l'étape de façonnage peuvent être réalisées dans un ordre quelconque.

17. Procédé pour la fabrication de corps façonnés plats présentant une épaisseur dans la plage de 0,5 à 1,5 cm, comprenant
(a) la mise à disposition d'une mousse à pores ouverts présentant une densité dans la plage de 5 à 500 kg/m³ et un diamètre moyen des pores dans la plage de 1 µm à 1 mm,
(b) la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et
(c) la réalisation d'une étape de façonnage,
où la mise en contact avec une formulation aqueuse d'au moins un composé présentant au moins un groupe semi-aminal ou aminal par molécule ou d'au moins un copolymère qui contient au moins un comonomère qui contient au moins un groupe OH ou groupe β-dicarbonyle ou groupe époxyde sous forme copolymérisée, et l'étape de façonnage peuvent être réalisées dans un ordre quelconque.

18. Procédé pour le nettoyage de surfaces avec utilisation d'au moins un aspirateur selon la revendication 15.

19. Procédé selon la revendication 18, **caractérisé en ce qu'**il s'agit, pour les surfaces, de sols.
